# EUROPÄISCHE PATENTANMELDUNG

(11) **EP 2 428 739 A2**
(43) Veröffentlichungstag der Anmeldung: **14.03.2012**
(21) Anmeldenummer: 11005969.8
(22) Anmeldetag: 21.07.2011
(51) Int. Cl.: F24D 3/16, F24H 7/02

(54) **Flächenheiz- und/oder kühlsystem**

(30) Priorität: 22.07.2010 AT 12352010
(71) Anmelder: Warmuth, Josef, 9562 Himmelberg (AT)
(72) Erfinder: Warmuth, Josef, 9562 Himmelberg (AT)
(74) Vertreter: Krause, Peter

(57) **Zusammenfassung**

Die Erfindung betrifft ein Flächenheiz- und/oder -kühlsystem, insbesondere für einen Innenraum als Boden-, Decken- und/oder Wandtemperierung. Das Flächenheiz- und/oder -kühlsystem bestehend aus mindestens einem Modul (1), wobei das Modul (1) eine Trägerplatte (2) und eine im Abstand angeordnete Deckplatte (3) aufweist und in dem entstehenden Freiraum zwischen der Trägerplatte (2) und der Deckplatte (3) mindestens eine Leitung (4) für ein Wärmemedium vorgesehen ist. Die Trägerplatte (2) weist an der den Leitungen (4) abgewandten Seite eine mit der Trägerplatte (2) fix verbundene Isolierung (5) auf. Die Leitung (4) ist in einem Speichermedium (7) eingebettet. Zum Verbinden der Leitungsenden von zwei aneinander gereihten Modulen (1) ist eine Steckverbindung (10) vorgesehen. Die Leitung (4) ist in einem zwischen Trägerplatte (2) und Deckplatte (3) angeordneten, vorzugsweise aus Kunststoff, Holz oder Metall bestehenden Register (11) angeordnet.

## Beschreibung

Die Erfindung betrifft ein Flächenheiz- und/oder -kühlsystem, insbesondere für einen Innenraum als Boden-, Decken- und/oder Wandtemperierung, bestehend aus mindestens einem Modul, wobei das Modul eine Trägerplatte und eine im Abstand, mit Abstandhaltern, angeordnete Deckplatte aufweist und in dem entstehenden Freiraum zwischen der Trägerplatte und der Deckplatte mindestens eine Leitung für ein Wärmemedium vorgesehen ist.

Wandpaneele mit Einrichtungen für das Heizen oder Kühlen sind an sich bekannt.

So ist aus der DE 10 2004 050 207 A1 ein Innenwandaufbau zur Innendämmung bekannt. Dieser Innenwandaufbau weist Schaumbetonstein als tragendes Element auf, bei dem in der Vorderseite Heizelemente eingebaut sind und bei dem die Rückseite eine Wärmedämmung besitzt.

Weiters ist aus der DE 10 2004 001 824 A1ein Heizelement in Sandwichbauweise bekannt. Das Heizelement ist eine flache Wandkonstruktion mit einer Ebene mit Rohren. Es weist eine Bewehrung gegen Verzug und eine Füllung aus Kompositwerkstoffen auf.

Aus der DE 10 217 941 A1 ist ein Flächenheiz- und -kühlsystem bekannt, dessen Paneele mit einem Rohrsystem versehen sind und hinter den Paneelen Luft durchgeblasen wird, die zur Temperierung heran gezogen wird. Ferner ist noch ein Wärmetauscher in das System integriert.

Aus der DE 10 047 465 A1 ist eine Modulplatte für eine elektrische Fußboden- oder Wandheizung bekannt, wobei auf einer Wärmedämmplatte die elektrischen Leitungen verlegt sind.

Ferner ist aus der DE 4 442 786 A1 eine Niedertemperaturheizfläche in Form einer Verbundplatte bekannt. Die Verbundplatte weist begrenzende Hohlprofile auf, die gleichzeitig den Vor- und Rücklauf der Heizung bilden.

Ein Wandpaneel für die Heizung oder Belüftung ist aus der US 2008 008 698 A1 bekannt. Eine Klimatisierung erfolgt aufgrund der porösen Struktur und einem integrierten Gebläse.

Ein Verfahren zur Herstellung eines transportablen, vorgefertigten Gebäudewandelementes aus Schalungssteinen ist aus der DE 10 2007 032 397 A1 bekannt.

Die JP 10 266 419 zeigt ein Wandheizpaneel.

Darüber hinaus ist noch aus der JP 2001 003 468 A1 ein Heizsystem aus Paneelen für eine Gebäudewand bekannt.

Nachteilig bei allen den oben aufgezeigten bekannten Paneelen ist es, dass von der Montage bis zur Fertigstellung der Heizung oder Kühlung aufwendige Arbeiten von Spezialpersonal notwendig sind.

Die Aufgabe der Erfindung ist es, ein Flächenheiz- und/oder -kühlsystem, insbesondere für einen Innenraum als Boden-, Decken- und/oder Wandtemperierung, zu schaffen, das einerseits die obigen Nachteile vermeidet und das anderseits trotzdem wirtschaftlich am Markt angeboten werden kann.

Die Aufgabe wird durch die Erfindung gelöst.

Das erfindungsgemäße Flächenheiz- und/oder -kühlsystem ist dadurch gekennzeichnet, dass die Trägerplatte an der den Leitungen abgewandten Seite eine mit der Trägerplatte fix verbundene Isolierung aufweist, dass die Leitung in einem Speichermedium eingebettet ist, dass zum Verbinden der Leitungsenden von zwei aneinander gereihten Modulen eine Steckverbindung vorgesehen ist und dass die Leitung in einem zwischen Trägerplatte und Deckplatte angeordneten, vorzugsweise aus Kunststoff, Holz oder Metall bestehenden Register angeordnet ist. Mit der Erfindung ist es erstmals möglich ein kompaktes, handliches Modul herzustellen, dass für die Montage an individuellen Flächen geeignet und beliebig erweiterbar ist. Insbesondere ist mit dem erfindungsgemäßen Flächenheiz- und/oder -kühlsystem, aufgrund der Isolierung und Wärmespeichermöglichkeit, ein Vollwärmeschutz zu erreichen. Durch die Verbindung von Register und Deckplatte entfallen aufwendige Arbeiten, beispielsweise für den Verputz, für eine fertige Oberfläche.

Das erfindungsgemäße Flächenheiz- und/oder -kühlsystem eignet sich auch besonders für die Altbausanierung, insbesondere an Flächen, die außen dem Denkmalschutz unterliegen und innen ein Vollwärmeschutz gewünscht wird.

Durch die Bemessung des Moduls auf eine handliche Größe, beispielsweise 50 cm x 100 cm, ist es vor allem zur Montage für Ein-Mann-Heimwerker gedacht.

Nach einer besonderen Ausgestaltung der Erfindung ist die Leitung in Form von Schlangenlinien oder meanderförmig in dem Modul bzw. in dem Register angeordnet. Durch die Einbettung in das Speichermedium ist die Leitung zur Ausgleichung von Temperaturschwankungen frei beweglich. Gerissene Leitungen aufgrund von Wärmespannungen werden vermieden.

Gemäß einem weiteren besonderen Merkmal der Erfindung ist zum Abschluss des Freiraumes zwischen der Trägerplatte und der Deckplatte eine, aus Kunststoff, Holz oder Metall bestehende, Abschlussleiste, gegebenenfalls mit Öffnungen für die Leitungsenden, vorgesehen, wobei die Abschlussleiste und das Register vorzugsweise einstückig ausgebildet ist. Durch die einstückige Ausbildung ist eine einfache, rationelle Fertigung des Moduls mit wenigen Einzelteilen möglich.

Nach einer besonderen Weiterbildung der Erfindung ist zur Versorgung eines oder mehrerer miteinander verbundener Module ein Vor- und ein Rücklaufkanal, jeweils als Ringleitung, vorgesehen. Durch die vorgesehene Ringleitung ist eine vorteilhafte, gleichmäßige Temperatursteuerung möglich. Ferner ergibt sich durch den Kanal für die Ringleitung die Möglichkeit der Verlegung von elektrischen Leitungen. Es müssen also im Zuge von Sanierungsarbeiten für die elektrischen Leitungen keine eigenen Kabelführungen in die Wand oder Boden gestemmt oder gefräst werden.

Gemäß einer besonderen Ausgestaltung der Erfindung besteht die Isolierung aus Kunststoff-Schaumstoffen oder mineralischen Dämmstoff. Der Hauptvorteil dieser Ausführung ist darin zu sehen, dass kein zusätzliches Isoliermaterial notwendig ist und auch keine wie immer gearteten Maurerarbeiten anfallen. Ferner ist durch die vorgesehene Isolierung eine gewisse Steuermöglichkeit für die Wärmeausbreitung gegeben.

Nach einer weiteren besonderen Ausgestaltung der Erfindung besteht die Trägerplatte und/oder die Deckplatte aus einer Gipsfaserplatte oder ist als Holzpressplatte ausgeführt. Durch die Ausführung mit einer Gipsfaserplatte ist eine gute Wärmeleitung gegeben. Dem heutigen Umweltgedanken und Trend folgend kann die Trägerplatte bzw. die Deckplatte natürlich aus Holzpressplatten gebildet sein. Diese Ausführung kommt einer Biobauweise sehr entgegen. Weiters sind durch diese Ausführungen fertige Wand- oder Boden-Oberflächen gegeben, die direkt für Malerarbeiten oder Tapetenaufbringung geeignet sind.

Gemäß einem besonderen Merkmal der Erfindung ist das Speichermedium, insbesondere loser oder leicht gebundener, Quarzsand oder, vorzugsweise entkeimtes, Sägemehl. Quarzsand hat entscheidend positive Eigenschaften für die Funktionsweise als Speichermedium. Einerseits umschließt der Sand die Leitung flexibel, wodurch der Vorteil gegeben ist, dass keine Dehnungsrisse durch Temperaturänderungen vorkommen. Anderseits hat der Quarzsand die Eigenschaft, dass er eine Konvektion zulässt, die eine gleichmäßige Wärmeverteilung begünstigt. Weiters hat der Quarzsand die Eigenschaft, dass er die Raumfeuchtigkeit absorbiert und gegebenenfalls auch wieder abgibt. Sägemehl hat ähnliche Eigenschaften, jedoch den Vorteil, dass es umweltfreundlich ist und als Klimazone betrachtet werden kann. Sägemehl kann auch sehr gut Feuchtigkeit aufnehmen und wieder abgeben.

Somit hat das Speichermedium zwei entscheidende Pufferfunktionen, nämlich Wärme- und Feuchtigkeitspuffer.

Nach einem weiteren besonderen Merkmal der Erfindung ist zum Distanzieren und Verbinden zweier Module ein Modulverbinder vorgesehen, der aus einer Basisplatte mit beidseitig angeordneter Grundplatte besteht, wobei an diese Grundplatten jeweils ein konisch verlaufender Führungsteil anschließt, der zwischen Trägerplatte und Deckplatte in das Modul eingreift. Mit diesem Modulverbinder ist eine stabile Verbindung von zwei Modulen gewährleistet, die vor allem auch die innenraumseitige Oberfläche der Deckplatte nicht unterbricht.

Gemäß einem besonderen Merkmal der Erfindung ist zur Verwendung des Moduls als Raumteiler oder Zwischenwand an einer Seite der Isolierung eine Trägerplatte mit im Abstand zur Trägerplatte angeordneter Deckplatte angeordnet und im entstehenden Freiraum, im Speichermedium eingebettet, ist die Leitung vorgesehen und an der der Trägerplatte abgewandten Seite der Isolierung ist eine weitere Deckplatte vorgesehen. Mit dieser besonders vorteilhaften Ausführung der erfindungsgemäßen Module ist die Herstellung einer Zwischenwand in einfachster Weise gewährleistet.

Nach einer weiteren Ausgestaltung der Erfindung ist Verwendung des Moduls als Raumteiler oder Zwischenwand an beiden Seite der Isolierung je eine Trägerplatte mit im Abstand zur Trägerplatte angeordneter Deckplatte angeordnet und in den entstehenden Freiräumen ist, im Speichermedium eingebettet, jeweils die Leitung vorgesehen. Natürlich liegt es auch im Rahmen der Erfindung eine Zwischenwand mit beidseitigen Heiz- oder Kühlsystem herzustellen.

Die Erfindung wird an Hand von Ausführungsbeispielen, die in den Zeichnungen dargestellt sind, näher erläutert.

Es zeigen:
- Fig. 1: eine Prinzipskizze zweier Module angeordnet an einer Wand,
- Fig. 2: eine Prinzipskizze einer Wand mit mehreren Modulen in Frontansicht
- Fig. 3: einen Schnitt durch ein als Boden verwendetes Modul
- Fig. 4: eine aus beidseitig angeordneten Modulen hergestellte Zwischenwand,
- Fig. 5: eine Zwischenwand mit nur an einer Seite angeordneten Modulen und
- Fig. 6: eine Ansicht eines Modulverbinder zum Verbinden zweier Module.

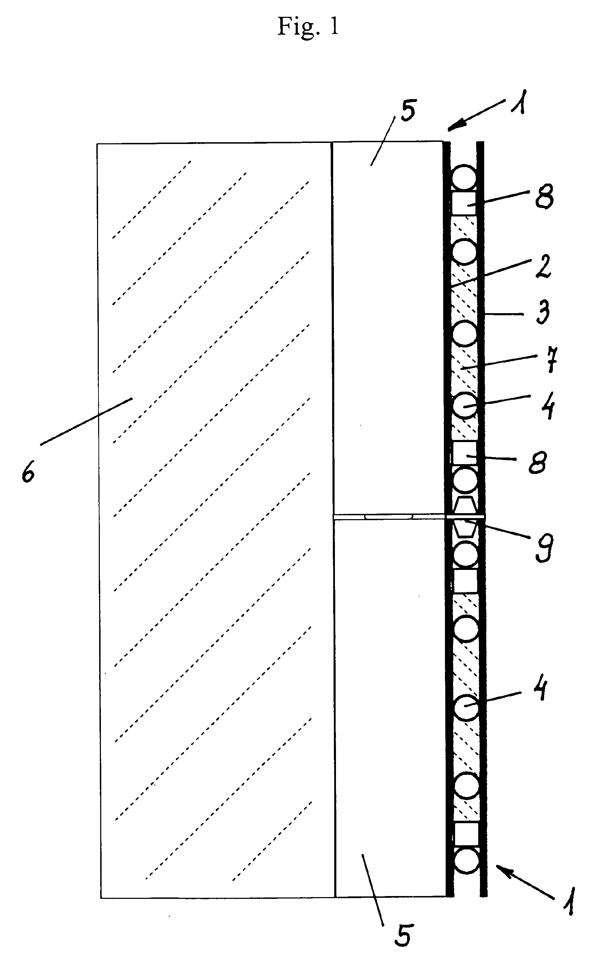

Gemäß der Fig. 1 ist ein Flächenheiz- und/oder -kühlsystem, insbesondere für einen Innenraum als Boden-, Decken- und/oder Wandtemperierung, gezeigt. Dieses Flächenheiz- und/oder -kühlsystem besteht aus mindestens einem Modul 1, wobei das Modul 1 eine Trägerplatte 2 und eine im Abstand angeordnete Deckplatte 3 aufweist. In dem entstehenden Freiraum zwischen der Trägerplatte 2 und der Deckplatte 3 ist mindestens eine Leitung 4 für ein Wärmemedium vorgesehen. Die Trägerplatte 2 weist an der den Leitungen 4 abgewandten Seite eine mit der Trägerplatte 2 fix verbundene Isolierung 5 auf. Die Isolierung 5 wird mit dem Mauerwerk 6 verbunden. Die Leitung 4 ist in einem Speichermedium 7 eingebettet.

Natürlich können bei Verwendung der Module 1 als Bodenheizung oder ―kühlung die Module 1 auch am Estrich aufliegen.

Zum Abschluss des Freiraumes zwischen der Trägerplatte 2 und der Deckplatte 3 ist eine, aus Kunststoff, Holz oder Metall bestehende, Abschlussleiste 8, gegebenenfalls mit Öffnungen für die Leitungsenden, vorgesehen. Zum Distanzieren und Verbinden zweier Module 1 ist ein Modulverbinder 9 vorgesehen.

Das Speichermedium 7 ist insbesondere loser oder leicht gebundener Quarzsand oder, vorzugsweise entkeimtes, Sägemehl.

Die Isolierung 5 besteht aus Kunststoff-Schaumstoffen oder mineralischen Dämmstoff. Die Trägerplatte 2 und/oder die Deckplatte 3 bestehen aus einer Gipsfaserplatte oder sind als Holzpressplatten ausgeführt.

Die Materialien Holzpressplatten und Sägemehl erfüllen die Kriterien des heutigen biologischen Bautrends.

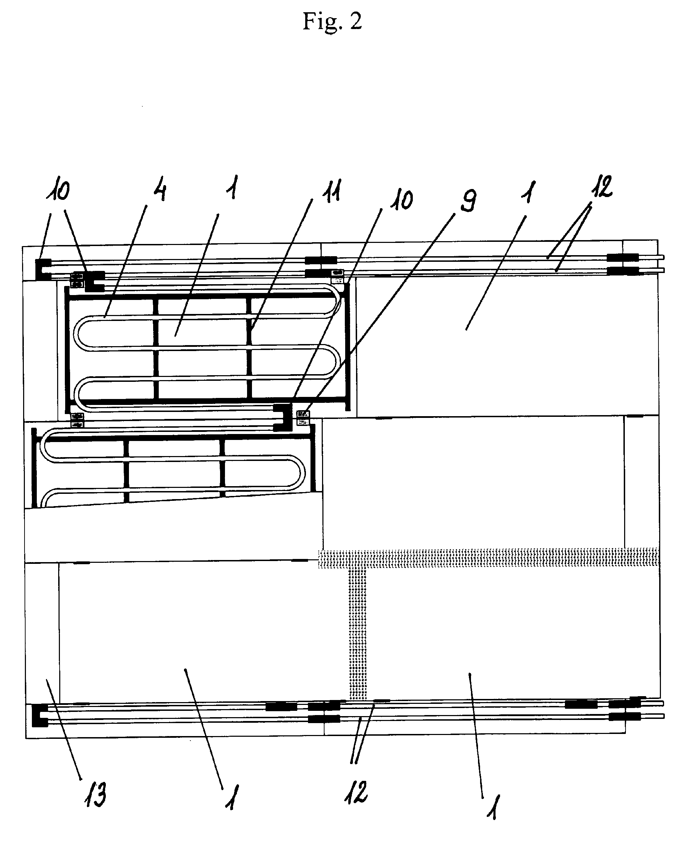

Gemäß der Fig. 2 ist das Flächenheiz- und/oder -kühlsystem, montiert an einer Wand, teilweise in der Zeichnung zum besseren Verständnis aufgerissen, gezeigt. Die einzelnen Module 1 werden, entsprechend der Wandgröße, aneinandergereiht.

Um relativ wenig oder sogar keine Ablängarbeiten der Leitungen zu haben, können die Module 1 als rechte und linke Module 1 vorgefertigt werden. Damit ist ein Zusammenstecken der Leitungen 4 zweier Module 1 ohne Leitungsbearbeitung möglich.

Zum Verbinden der Leitungsenden von zwei aneinander gereihten Modulen 1 ist eine Steckverbindung 10 vorgesehen. Weiters ist die Leitung 4 in einem zwischen Trägerplatte 2 und Deckplatte 3 angeordneten, vorzugsweise aus Kunststoff, Holz oder Metall bestehenden Register 11 angeordnet. Die Abschlussleiste 8 und das Register 11 sind vorzugsweise einstückig ausgebildet.

Zum Distanzieren und Verbinden zweier Module 1 ist ― wie bereits erwähnt - ein Modulverbinder 9 vorgesehen.

Zur Versorgung eines oder mehrerer miteinander verbundener Module 1 ist ein Vor- und ein Rücklaufkanal 12 jeweils als Ringleitung, vorgesehen. Natürlich erfolgt auch die Verbindung von Ringleitung mit den Leitungen 4 der Module 1 über Steckverbindungen 10. Damit ist eine sehr einfache Montage gewährleistet.

Zur flächigen Wandergänzung, also dass eine einheitliche Deckfläche des Flächenheiz- und/oder -kühlsystem erreicht wird, können auch sogenannte Blindmodule 13, die kein Leitungssystem aufweisen, an der Wand montiert werden.

Nach Abschluss der Montagearbeiten der Module 1 am Mauerwerk 6 werden die Fugen zwischen den benachbarten Modulen 1 ausgeschäumt, wodurch sich eine nahtlose Oberfläche ergibt.

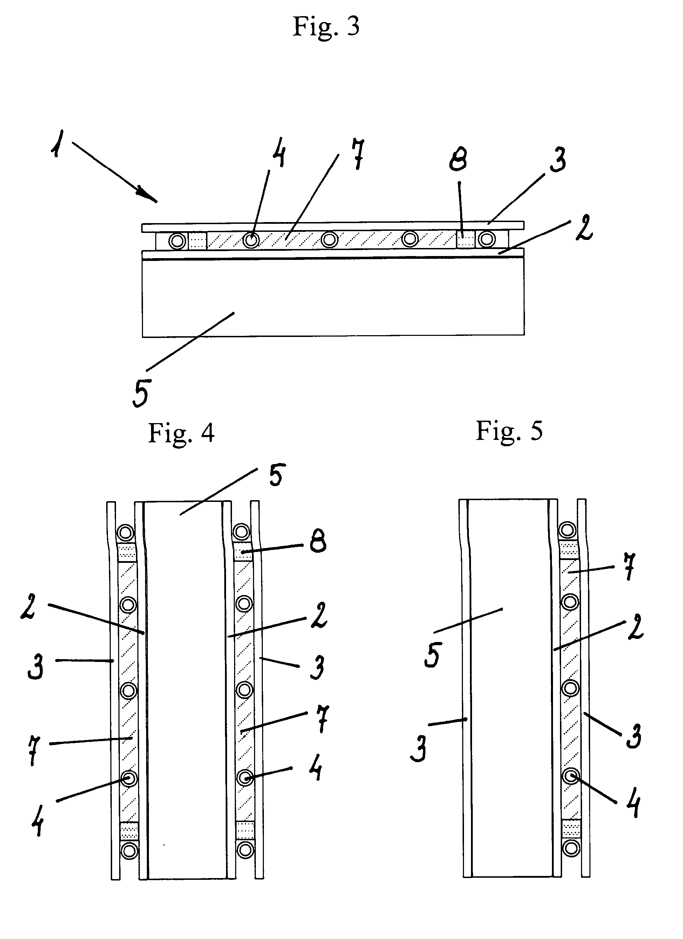

Gemäß der Fig. 3 ist ein Modul 1 zur Verwendung als Bodenheizung oder Bodenkühlung gezeigt. Die Trägerplatte 2 ist mit der am Estrich aufliegenden Isolierung 5 fix verbunden. Im Abstand zur Trägerplatte 2 ist die Deckplatte 3, die dann als begehbare Fläche ausgeführt ist, vorgesehen. Zwischen Trägerplatte 2 und Deckplatte 3 ist die Leitung 4, eingebettet im Speichermedium 7 für das Wärmemedium angeordnet.

Gemäß der Fig. 4 ist zur Verwendung des Moduls 1 als Raumteiler oder Zwischenwand an beiden Seite der Isolierung 5 je eine Trägerplatte 2 mit im Abstand zur Trägerplatte 2 angeordneter Deckplatte 3 angeordnet. In den entstehenden Freiräumen, im Speichermedium 7 eingebettet, ist jeweils die Leitung 4 vorgesehen.

Gemäß der Fig. 5 ist zur Verwendung des Moduls 1 als Raumteiler oder Zwischenwand nur an einer Seite der Isolierung 5 eine Trägerplatte 2 mit im Abstand zur Trägerplatte 2 angeordneter Deckplatte 3 angeordnet. Entsprechend den obigen Ausführungen ist im entstehenden Freiraum, im Speichermedium 7 eingebettet, die Leitung 4 vorgesehen. An der der Trägerplatte 2 abgewandten Seite der Isolierung 5 ist ― ohne Leitungen nur eine weitere Deckplatte 3 vorgesehen.

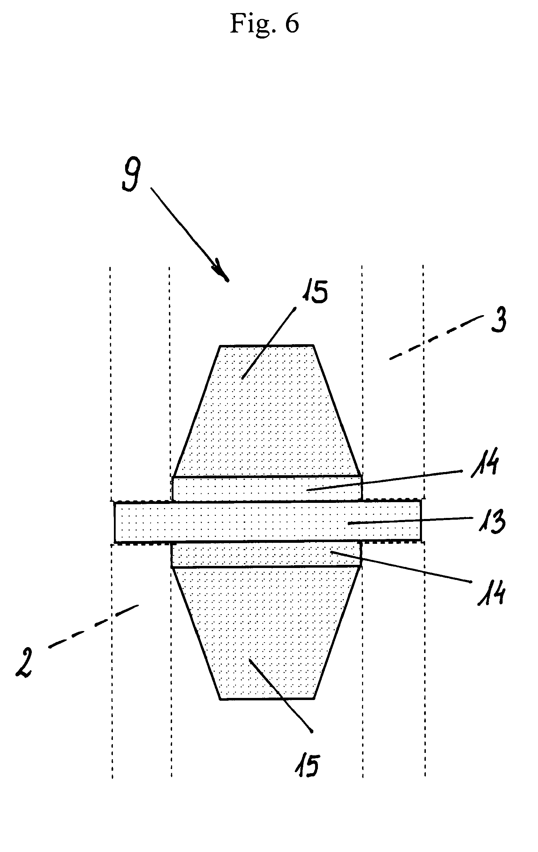

Die Fig. 6 zeigt den Modulverbinder 9 zum Distanzieren und Verbinden zweier Module 1. Der Modulverbinder 9 besteht aus einer Basisplatte 13 mit beidseitig angeordneter Grundplatte 14. An diese Grundplatten 14 schließt jeweils ein konisch verlaufender Führungsteil 15 an, der zwischen Trägerplatte 2 und Deckplatte 3 in das Modul 1 eingreift. Über die etwas größere Basisplatte 13, wie die Grundplatte 14 ist, werden die beiden benachbarten Module 1 gegeneinander distanziert. Die Trägerplatte 2 und die Deckplatte 3 werden über die Grundplatte 14 distanziert. Der konische Führungsteil 15 greift zwischen der Trägerplatte 2 und der Deckplatte zur Stabilisierung in das Modul 1 ein.

## Patentansprüche

1. Flächenheiz- und/oder -kühlsystem, insbesondere für einen Innenraum als Boden-, Decken- und/oder Wandtemperierung, bestehend aus mindestens einem Modul, wobei das Modul eine Trägerplatte und eine im Abstand angeordnete Deckplatte aufweist und in dem entstehenden Freiraum zwischen der Trägerplatte und der Deckplatte mindestens eine Leitung für ein Wärmemedium vorgesehen ist, **dadurch gekennzeichnet, dass** die Trägerplatte (2) an der den Leitungen (4) abgewandten Seite eine mit der Trägerplatte (2) fix verbundene Isolierung (5) aufweist, dass die Leitung (4) in einem Speichermedium (7) eingebettet ist, dass zum Verbinden der Leitungsenden von zwei aneinander gereihten Modulen (1) eine Steckverbindung (10) vorgesehen ist und dass die Leitung (4) in einem zwischen Trägerplatte (2) und Deckplatte (3) angeordneten, vorzugsweise aus Kunststoff, Holz oder Metall bestehenden Register (11) angeordnet ist.

2. Flächenheiz- und/oder -kühlsystem nach Anspruch 1, **dadurch gekennzeichnet, dass** die Leitung (4) in Form von Schlangenlinien oder meanderförmig in dem Modul (1) bzw. in dem Register (11) angeordnet ist.

3. Flächenheiz- und/oder -kühlsystem nach Anspruch 1 oder 2, **dadurch gekennzeichnet, dass** zum Abschluss des Freiraumes zwischen der Trägerplatte (2) und der Deckplatte (3) eine, aus Kunststoff, Holz oder Metall bestehende, Abschlussleiste (8), gegebenenfalls mit Öffnungen für die Leitungsenden, vorgesehen ist, wobei die Abschlussleiste (8) und das Register (11) vorzugsweise einstückig ausgebildet ist.

4. Flächenheiz- und/oder -kühlsystem nach einem oder mehreren der Ansprüche 1 bis 3, **dadurch gekennzeichnet, dass** zur Versorgung eines oder mehrerer miteinander verbundener Module (1) ein Vor- und ein Rücklaufkanal (12), jeweils als Ringleitung, vorgesehen ist.

5. Flächenheiz- und/oder -kühlsystem nach einem oder mehreren der Ansprüche 1 bis 4, **dadurch gekennzeichnet, dass** die Isolierung (5) aus Kunststoff-Schaumstoffen oder mineralischen Dämmstoff besteht.

6. Flächenheiz- und/oder -kühlsystem nach einem oder mehreren der Ansprüche 1 bis 5, **dadurch gekennzeichnet, dass** die Trägerplatte (2) und/oder die Deckplatte (3) aus einer Gipsfaserplatte besteht oder als Holzpressplatte ausgeführt ist.

7. Flächenheiz- und/oder -kühlsystem nach einem oder mehreren der Ansprüche 1 bis 6, **dadurch gekennzeichnet, dass** das Speichermedium (7), insbesondere loser oder leicht gebundener, Quarzsand oder, vorzugsweise entkeimtes, Sägemehl ist.

8. Flächenheiz- und/oder -kühlsystem nach einem oder mehreren der Ansprüche 1 bis 7, **dadurch gekennzeichnet, dass** zum Distanzieren und Verbinden zweier Module ein Modulverbinder (9) vorgesehen ist, der aus einer Basisplatte (13) mit beidseitig angeordneter Grundplatte (14) besteht, wobei an diese Grundplatten (14) jeweils ein konisch verlaufender Führungsteil (15) anschließt, der zwischen Trägerplatte (2) und Deckplatte (3) in das Modul (1) eingreift.

9. Flächenheiz- und/oder -kühlsystem nach einem oder mehreren der Ansprüche 1 bis 8, **dadurch gekennzeichnet, dass** zur Verwendung des Moduls (1) als Raumteiler oder Zwischenwand an einer Seite der Isolierung (5) eine Trägerplatte (2) mit im Abstand zur Trägerplatte (2) angeordneter Deckplatte (3) angeordnet ist und im entstehenden Freiraum, im Speichermedium (7) eingebettet, die Leitung (4) vorgesehen ist und an der der Trägerplatte (2) abgewandten Seite der Isolierung (5) eine weitere Deckplatte (3) vorgesehen ist.

10. Flächenheiz- und/oder -kühlsystem nach einem oder mehreren der Ansprüche 1 bis 9, **dadurch gekennzeichnet, dass** zur Verwendung des Moduls (1) als Raumteiler oder Zwischenwand an beiden Seite der Isolierung (5) je eine Trägerplatte (2) mit im Abstand zur Trägerplatte (2) angeordneter Deckplatte (3) angeordnet ist und in den entstehenden Freiräumen, im Speichermedium (7) eingebettet, jeweils die Leitung (4) vorgesehen ist.
